# EUROPEAN PATENT APPLICATION

(11) **EP 4 811 439 A1**
(43) Date of publication of application: **23.09.2026**
(21) Application number: 24899243.0
(22) Date of filing: 10.07.2024
(51) Int. Cl.: H01M 4/133, H01M 4/62

(54) **SECONDARY BATTERY AND ELECTRIC DEVICE**

(30) Priority: 07.12.2023 CN 202311675385
(71) Applicant: Contemporary Amperex Technology Co., Limited, Ningde, Fujian 352100 (CN)
(72) Inventor: LIU, Wei, Ningde, Fujian 352100 (CN); MA, Jianjun, Ningde, Fujian 352100 (CN); PENG, Bin, Ningde, Fujian 352100 (CN); HE, Libing, Ningde, Fujian 352100 (CN)
(74) Representative: Ziebig Hengelhaupt Intellectual Property Attorneys Patentanwaltskanzlei PartGmbB
(86) International application number: PCT/CN2024/104744
(87) International publication number: WO 2025/118592

(57) **Abstract**

Provided in the present disclosure are a secondary battery and an electric device. The secondary battery comprises: a negative electrode sheet, wherein the negative electrode sheet comprises a negative electrode current collector and a negative electrode film layer formed on at least one surface of the negative electrode current collector; the negative electrode film layer has a first surface away from the negative electrode current collector and a second surface arranged opposite the first surface; the thickness of the negative electrode film layer is denoted as H; a region within a thickness range from the second surface of the negative electrode film layer to 0.3H is denoted as a first region of the negative electrode film layer; a region within a thickness range from the first surface of the negative electrode film layer to 0.3H is denoted as a second region of the negative electrode film layer; the first region comprises a first binder, the first binder being a linear binder; and the second region comprises a second binder, the second binder being a dot-like binder. The secondary battery can reduce the cold-press rebound rate and cyclic expansion rate of an electrode sheet, thereby improving the cycling stability of the battery.

## Description

### CROSS-REFERENCE TO RELATED APPLICATIONS

The present application claims priority to Chinese Patent Application No. 202311675385.7, filed on December 07, 2023 and entitled "SECONDARY BATTERY AND POWER CONSUMING APPARATUS", which is incorporated herein by reference in its entirety.

### TECHNICAL FIELD

The present disclosure belongs to the field of battery technologies, and in particular, to a secondary battery and a power consuming apparatus.

### BACKGROUND

In recent years, secondary batteries have been widely used in energy storage power systems such as hydraulic, thermal, wind, and solar power stations, as well as in various fields such as power tools, electric bicycles, electric motorcycles, electric vehicles, military equipment, and aerospace.

As the secondary batteries are applied to a broader range, higher demands are being placed on the performance of the secondary batteries. For example, there is a growing need to prolong the service life of the secondary batteries to enhance the endurance of power consuming apparatuses.

### SUMMARY

The present disclosure has been developed in light of the foregoing technical problems, and aims to provide a secondary battery and a power consuming apparatus, to prolong the service life of the secondary battery.

According to a first aspect of the present disclosure, a secondary battery is provided, including a negative electrode plate. The negative electrode plate includes a negative electrode current collector and a negative electrode film layer formed on at least one surface of the negative electrode current collector. The negative electrode film layer has a first surface away from the negative electrode current collector and a second surface arranged opposite to the first surface. A thickness of the negative electrode film layer is denoted as H. A region within a thickness range from the second surface of the negative electrode film layer to 0.3H is denoted as a first region of the negative electrode film layer. A region within a thickness range from the first surface of the negative electrode film layer to 0.3H is denoted as a second region of the negative electrode film layer. The first region includes a first binder. The first binder is a linear binder. The second region includes a second binder. The second binder is a dotted binder.

By using the linear first binder in the first region of the negative electrode film layer close to the current collector and the dotted second binder in the second region of the negative electrode film layer away from the current collector, a probability of the linear binder contacting moisture can be effectively reduced, thereby reducing a moisture absorption rate of the negative electrode plate, mitigating the increase in the thickness of the electrode plate caused by moisture absorption of the linear binder, fully leveraging the advantages of the linear binder, such as numerous polar functional groups and strong bonding, and achieving a low expansion rate of the electrode plate while reducing a defective product rate and a likelihood of significant deterioration in battery cycle stability.

In any embodiment of the present disclosure, a weight-average molecular weight of the first binder is greater than a weight-average molecular weight of the second binder.

The linear first binder exhibits a higher weight-average molecular weight compared to the dotted second binder, thereby contributing to enhancing the cohesion of the negative electrode film layer and the bonding power between the negative electrode film layer and the current collector, further reducing the springback rate of the electrode plate after cold pressing and the expansion rate after full charging of the battery, and comprehensively improving the processing performance and cycle stability of the battery.

In any embodiment of the present disclosure, a mass proportion of the first binder in the first region is greater than a mass proportion of the second binder in the second region. The mass proportion of the first binder in the first region refers to a mass percentage of the first binder based on a total mass of the negative electrode film layer in the first region. The mass proportion of the second binder in the second region refers to a mass percentage of the second binder based on a total mass of the negative electrode film layer in the second region.

During the slurry coating and drying of the electrode plate, the binder close to the current collector tends to float up to the surface of the negative electrode film layer as a solvent evaporates. To be specific, the binder migrates from the first region of the electrode plate to the second region of the electrode plate, resulting in insufficient binder content in the first region of the electrode plate. Consequently, the cohesion of the negative electrode film layer and the bonding power between the negative electrode film layer and the current collector are significantly compromised. Simultaneously, the binder floating up is prone to clogging pore structures in the upper second region of the electrode plate, making it difficult for an electrolyte solution to infiltrate, and leading to insufficient battery kinetics. By setting that the mass proportion of the first binder in the first region is greater than the mass proportion of the second binder in the second region, the cohesion of the negative electrode film layer and the bonding power between the negative electrode film layer and the current collector are enhanced, the expansion of negative electrode active materials is restrained, and the cycle stability of the battery is improved. The pore clogging on the surface of the electrode plate can be reduced, and the kinetic performance of the battery is optimized.

In any embodiment of the present disclosure, the first binder includes an acrylic binder. Additionally or alternatively, the second binder includes styrene-butadiene copolymer.

In any embodiment of the present disclosure, the acrylic binder includes at least one of polyacrylic acid, polymethacrylic acid, polymethyl acrylate, polyethyl methacrylate, polyhydroxyethyl methacrylate, polyhydroxyethyl acrylate, polyhydroxypropyl acrylate, polyhydroxypropyl methacrylate, polyhydroxyethyl acrylate, polypropyl methacrylate, polyethyl acrylate, and polymethyl methacrylate.

The acrylic binder has a plurality of polar functional groups and is a linear binder, allowing to fully extend in the solvent and coat the surface between the negative electrode active materials. The contact area is large, the springback of the electrode plate can be effectively reduced by bonding, and the cycle stability of the battery is enhanced.

In any embodiment of the present disclosure, the weight-average molecular weight of the first binder is 500 to 1500, optionally 800 to 1000. The weight-average molecular weight of the second binder is 100 to 200.

In any embodiment of the present disclosure, the mass proportion of the first binder in the first region is 1.0% to 3.0%, optionally 1.0% to 2.5%. Additionally or alternatively, the mass proportion of the second binder in the second region is 0.6% to 1.5%, optionally 0.6% to 1.2%.

The binder within the foregoing content range enables the battery to achieve both excellent cycle stability and kinetic performance.

In any embodiment of the present disclosure, a compaction density of the negative electrode film layer is 1.55 g/cm³ to 1.68 g/cm³.

In any embodiment of the present disclosure, the negative electrode film layer includes a conductive agent. A mass proportion of the conductive agent is 0.4% to 2.0% based on the total mass of the negative electrode film layer.

In any embodiment of the present disclosure, the first region and/or the second region include graphite. A specific surface area of the graphite is 1.2 m²/g to 1.8 m²/g, optionally 1.25 m²/g to 1.70 m²/g.

The specific surface area of the graphite material within the foregoing range contributes to a further reduction in side reactions of the graphite material and prolongs the cycle life of the secondary battery.

In any embodiment of the present disclosure, a volume distribution particle size Dv50 of the graphite is 7.0 µm to 14.0 µm, optionally 9.0 µm to 12.0 µm.

In any embodiment of the present disclosure, a particle size distribution (Dv90-Dv10)/Dv50 of the graphite is 1.10 to 1.60, optionally 1.20 to 1.50.

Controlling the particle size distribution of the graphite material within the foregoing range contributes to enhancement of the close packing of the graphite material and the compaction density of the negative electrode plate. In other words, a lower cold pressing pressure is required to achieve the same compaction density of the negative electrode plate, thereby reducing a risk of cracking in the graphite material during cold pressing and further enhancing the integrity of the graphite material during processing. Additionally, a low internal stress within the particles of the graphite material contributes to maintenance of a long-term pore channel structure in the electrode plate during cycling, and can maintain an original pore structure of the electrode plate during cycling, thereby ensuring unimpeded lithium-ion intercalation paths while minimizing film re-formation of the graphite material during charging, and improving kinetic performance, cycle life, and storage stability. Furthermore, the particle size distribution within the foregoing range promotes evenness of lithium intercalation among the particles of the graphite material, reduces polarization, and prevents lithium plating caused by uneven current density, thereby achieving long-term cycle stability. In addition, the particle size distribution within the foregoing range also enhances the processability of the electrode plate, avoids impact on the evenness of slurry stirring caused by excessive fine particles in the graphite material, benefits the uniformity and stability of quality of the electrode plate, and further improves the long-term cycle stability.

In any embodiment of the present disclosure, a gram capacity of the graphite is 345 mAh/g to 355 mAh/g, optionally 347 mAh/g to 353 mAh/g.

The graphite material having the gram capacity within the foregoing range will not undergo significant lattice expansion due to excessive graphitization of the graphite material during charging and discharging. It will not be difficult to compact due to low graphitization of the graphite material, so that a higher cold pressing pressure can be used to achieve the required compaction density of the electrode plate, thereby causing the graphite material to crack during cold pressing and consume too much active lithium once a new interface is generated during cycling. The graphite material having the gram capacity within the foregoing range can comprehensively prolong the cycle life of the secondary battery.

In any embodiment of the present disclosure, a powder compaction density of the graphite under a pressure of 49000 N is less than or equal to 1.85 g/cm³, optionally 1.75 g/cm³ to 1.84 g/cm³.

The graphite material having a powder compaction density within the foregoing range tends to maintain high particle integrity during cold pressing, and contributes to improvement of the cycle life of the secondary battery.

In any embodiment of the present disclosure, a particle body of the graphite includes an internal region and a surface region at least partially enclosing the internal region. The surface region refers to a region extending 30 nm from a surface of the particle body to the interior of a particle. The surface region includes a disordered layer. Optionally, a thickness of the disordered layer is 1 nm to 20 nm.

The disordered layer mainly includes amorphous carbon. An irregular arrangement of carbon atoms in the amorphous carbon structure makes an intermolecular interaction force more complex, thereby achieving a higher strength and hardness compared to graphite crystal in the internal region, reducing a probability of particle surface damage caused by friction between particles and between a particle and a stirring tank during slurry preparation, and reducing a risk of particle cracking and new interface exposure of the graphite material during the cold pressing of the electrode plate, so that the graphite material maintains a higher particle integrity during manufacturing. The graphite material having a high particle integrity has fewer surface defects and a good interface with the electrolyte solution, which can effectively reduce the side reactions between the negative electrode plate and the electrolyte solution, reduce the loss of active lithium, and is beneficial to enhancement of battery storage stability and cycle stability. Also, the disordered layer on the graphite material is beneficial to enhancement of the infiltration between the electrolyte solution and the negative electrode plate and enhancement of the kinetic performance of the battery.

Different from the disordered layer coated on the surface of the graphite material in the related art, the disordered layer of the graphite material provided in this embodiment of the present disclosure is located in the particle body of the graphite material, which is derived from the same raw material as the graphite material, and is not prepared by post-processing. Therefore, the graphite material has better material consistency than the graphite material provided with the disordered layer obtained by surface coating treatment, so that the battery exhibits a longer cycle life, thereby balancing battery kinetic performance, cycle stability, and storage stability. It is especially suitable for energy storage batteries that have extremely high requirements for cycle life and storage life.

In any embodiment of the present disclosure, the graphite includes both primary particles and secondary particles. Optionally, a quantity proportion of the secondary particles is less than or equal to 50% based on a total quantity of the primary particles and the secondary particles.

For the graphite material having a low quantity proportion of secondary particles, the particle integrity of the graphite material can be maintained during battery preparation, the formation of new interfaces is reduced, the consumption of active lithium during cycling is reduced, and the cycle stability of the secondary battery is further enhanced. Additionally, a particular quantity of secondary particles can reduce the expansion of the negative electrode plate while maintaining the kinetic performance of the secondary battery, thereby enabling a cell to have a kinetic window throughout a full life cycle, preventing a sharp decline in battery capacity and a rapid deterioration of battery life due to lithium plating caused by uneven current distribution, and comprehensively improving the cycle stability of the battery.

In any embodiment of the present disclosure, a graphitization degree of the graphite is 92.0% to 94.0%.

In any embodiment of the present disclosure, I_{D}/I_{G} of the graphite material is 0.05 to 0.10, where I_{D}/I_{G} is a ratio of a D peak intensity to a G peak intensity by Raman spectroscopy, I_{D} represents the D peak intensity at 1350±100 cm⁻¹, and I_{G} represents the G peak intensity at 1580±100 cm⁻¹.

ID/IG of the graphite material may be used to characterize a surface disorder degree of the graphite material. Unlike an active material with a disordered layer coated onto the surface of a graphite particle body, the graphite material provided in the embodiments of the present disclosure has a surface disordered layer while maintaining a low surface disorder degree. The disordered layer in the active material with the disordered layer coated onto the surface of the graphite particle body typically originates from coated organic carbon, and a carbonized disordered layer has a high surface disorder degree. In contrast, the disordered layer structure in the surface region of the graphite material provided in the embodiments of the present disclosure derives from the same precursor as other parts of the graphite material. Moreover, the disordered layer has a high evenness and an ultra-small thickness, resulting in a low surface disorder degree. This configuration allows the graphite material to leverage the advantages of the disordered layer, enhancing the kinetic performance of the battery, while avoiding excessive side reactions caused by an excessively disordered material surface, thereby enhancing the kinetic performance of the battery without compromising the cycle stability of the battery.

According to a second aspect of the present disclosure, a power consuming apparatus is provided, including a secondary battery according to the first aspect of the present disclosure.

### BRIEF DESCRIPTION OF THE DRAWINGS

To describe technical solutions in embodiments of the present disclosure more clearly, the following briefly describes the accompanying drawings required for describing the embodiments of the present disclosure. Obviously, the accompanying drawings described below are merely some embodiments of the present disclosure. A person skilled in the art may further derive other accompanying drawings from such accompanying drawings without making any creative efforts.
FIG. 1 is a schematic diagram of an embodiment of a negative electrode plate according to the present disclosure;
FIG. 2 is a schematic diagram of another embodiment of a negative electrode plate according to the present disclosure;
FIG. 3 is a schematic diagram of still another embodiment of a negative electrode plate according to the present disclosure;
FIG. 4 is a schematic diagram of a cross-sectional image of a particle of a graphite material according to the present disclosure;
FIG. 5 is a schematic diagram of an embodiment of a secondary battery according to the present disclosure;
FIG. 6 is a schematic exploded view of an embodiment of a secondary battery according to the present disclosure;
FIG. 7 is a schematic diagram of an embodiment of a battery module according to the present disclosure;
FIG. 8 is a schematic diagram of an embodiment of a battery pack according to the present disclosure;
FIG. 9 is a schematic exploded view of the embodiment of the battery pack shown in FIG. 8;
FIG. 10 is a schematic diagram of an embodiment of a power consuming apparatus including a secondary battery of the present disclosure as a power supply;
FIG. 11 is a scanning electron microscope (SEM) view of a second region of an embodiment of a negative electrode plate according to the present disclosure; and
FIG. 12 is an SEM view of a first region of an embodiment of a negative electrode plate according to the present disclosure.

In the accompanying drawings, the accompanying drawings are not drawn to actual scale. Reference Numerals: 1, battery pack; 2, upper box; 3, lower box; 4, battery module; 5, secondary battery; 51, case; 52, electrode assembly; 53, cover plate; 10, negative electrode plate; 101, negative electrode current collector; 102, negative electrode film layer; 102a, first surface; 102b, second surface; 1021, first region; 1022, second region; 1023, middle region; 200, graphite material; 201, surface region; 202, internal region.

### DETAILED DESCRIPTION

Embodiments of a secondary battery and a power consuming apparatus of the present disclosure will be specifically disclosed in detail below as appropriate with reference to the accompanying drawings. However, there may be cases where unnecessary detailed illustrations are omitted. For example, there are cases where detailed explanations of well-known matters and repeated explanations of actually the same structure are omitted. Thus, the following illustrations do not become unnecessarily lengthy, which facilitates understanding by a person skilled in the art. In addition, the drawings and subsequent descriptions are provided for a person skilled in the art to fully understand the present disclosure and are not intended to limit the subject matter defined in the claims.

The "ranges" disclosed in the present disclosure are defined in the form of lower and upper limits. A given range is defined by selecting a lower limit and an upper limit, and the selected lower and upper limits define the boundaries of the particular range. The range defined in this way may include or exclude end values, and may be arbitrarily combined. To be specific, any lower limit may be combined with any upper limit to form a new range. For example, if ranges of 60 to 120 and 80 to 110 are listed for a particular parameter, it is to be understood that ranges of 60 to 110 and 80 to 120 are also contemplated. In addition, if the minimum range values 1 and 2 and the maximum range values 3, 4 and 5 are listed, the following ranges are all contemplated: 1 to 3, 1 to 4, 1 to 5, 2 to 3, 2 to 4 and 2 to 5. In the present disclosure, unless otherwise specified, the numerical value range "a-b" represents an abbreviated representation of any combination of real numbers between a and b, where a and b are both real numbers. For example, the numerical range "0 to 5" represents that all real numbers between 0 and 5 are listed herein, and "0 to 5" is merely the abbreviated representation of the combination of these numbers. In addition, when a parameter is expressed as an integer greater than or equal to 2, it is equivalent to disclosing that the parameter is an integer such as 2, 3, 4, 5, 6, 7, 8, 9, 10, 11, 12, or the like.

Unless otherwise specified, all the embodiments and optional embodiments of the present disclosure may be combined with each other to form new technical solutions, and such technical solutions should be considered to be included in the disclosure of the present disclosure.

Unless otherwise specified, all the technical features and optional technical features of the present disclosure may be combined with each other to form new technical solutions, and such technical solutions should be considered to be included in the disclosure of the present disclosure.

Unless otherwise specified, all the steps in the present disclosure may be carried out, either in order or randomly, preferably in order. For example, that "the method includes step (a) and step (b)" indicates that the method may include step (a) and step (b) performed sequentially, or the method may include step (b) and step (a) performed sequentially. For example, the reference to "the method may further include step (c)" indicates that step (c) may be added to the method in any order, e.g., the method may include steps (a), (b) and (c), or steps (a), (c) and (b), or steps (c), (a) and (b), or the like.

Unless otherwise specified, the terms such as "include", "comprise", and their variants mentioned in the present disclosure may be open-ended or closed-ended. For example, "include" and "comprise" may indicate that it is possible to include or comprise other components not listed, and it is also possible to include or comprise the listed components exclusively.

Unless otherwise specified, the term "or" is inclusive in the present disclosure. For example, a phrase "A or B" means "A, B, or both A and B". More specifically, the condition "A or B" is satisfied when any one of the following conditions is satisfied: A is true (or present) and B is false (or absent); A is false (or absent) and B is true (or present). Alternatively, both A and B are true (or present).

Unless otherwise stated, the terms used in the present disclosure have well-known meanings as commonly understood by a person skilled in the art.

Unless otherwise stated, the values of the parameters mentioned in the present disclosure may be measured by various test methods commonly used in the art, for example, may be measured according to the test methods given in the present disclosure.

Unless otherwise specified, the term "active ion" in the present disclosure refers to ions capable of reversibly intercalating into and deintercalating from positive and negative electrodes of a secondary battery, including but not limited to lithium ions.

In the present disclosure, the term "multiple" or "a plurality of" indicates two or more.

A binder is a crucial component of the electrodes of the secondary battery. Although the binder constitutes a small proportion of the electrode, the binder is closely related to the electrochemical performance of the secondary battery. The primary functions of the binder include bonding various components of an electrode plate, such as an active material, a conductive agent, and a current collector, into a stable electrode plate structure, while also facilitating better contact between the active material and the conductive agent to form a good conductive network. Additionally, the binder may further mitigate volume expansion and contraction of positive and negative electrode materials during lithium intercalation and deintercalation, thereby stabilizing an internal structure of the electrode plate to obtain a good cycle performance. Taking a negative electrode binder as an example, during use of the secondary battery, the intercalation or deintercalation of active ions in a negative electrode active material causes volume expansion or contraction of the negative electrode active material, increased interplanar spacing of the negative electrode active material, and increased volume expansion rate. Thus, the negative electrode binder is also required to provide a buffering effect against the expansion or contraction of the negative electrode active material. Styrene-butadiene rubber (SBR) is a commonly used negative electrode binder. As an elastomer copolymerized from 1,3-butadiene and styrene, the flexibility of a negative electrode plate can be effectively improved. However, SBR is dotted in a negative electrode film layer and is connected to the negative electrode active material in a point-to-point combination manner. A small combination surface makes it difficult to effectively reduce the springback of the negative electrode plate after cold pressing or the expansion of the negative electrode active material upon full charging, ultimately undermining the cycle stability of the secondary battery.

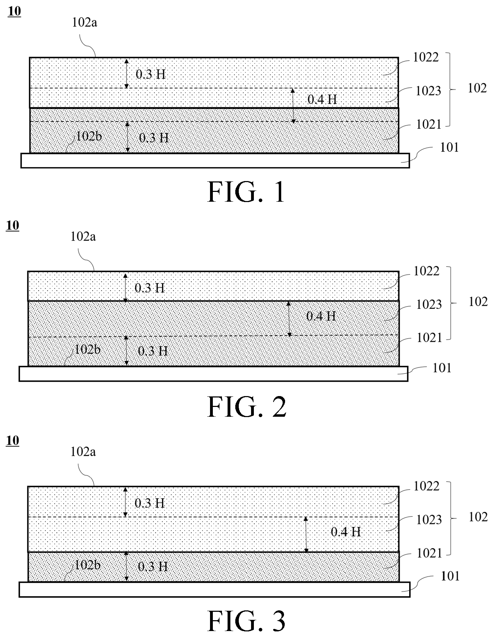

Based on this, the present disclosure provides a secondary battery, including a negative electrode plate. FIG. 1 to FIG. 3 are schematic diagrams of embodiments of a negative electrode plate according to the present disclosure. As shown in FIG. 1 to FIG. 3, the negative electrode plate 10 includes a negative electrode current collector 101 and a negative electrode film layer 102 formed on at least one surface of the negative electrode current collector 101. The negative electrode film layer 102 has a first surface 102a away from the negative electrode current collector 101 and a second surface 102b arranged opposite to the first surface 102a. A thickness of the negative electrode film layer 102 is denoted as H. A region within a thickness range from the second surface 102b of the negative electrode film layer to 0.3H is denoted as a first region 1021 of the negative electrode film layer. A region within a thickness range from the first surface 102a of the negative electrode film layer to 0.3H is denoted as a second region 1022 of the negative electrode film layer. The first region 1021 includes a first binder. The first binder is a linear binder. The second region 1022 includes a second binder. The second binder is a dotted binder.

In the present disclosure, the morphology of the binder may be observed after a morphological picture of a sample to be tested for the morphology of the binder is obtained by using an SEM. As an example, a negative electrode plate is cut into a sample to be tested (10 mm × 5 mm). The sample to be tested is sandwiched by using two copper plates. The sample to be tested is adhered and fixed to the copper plates by using a double-sided adhesive tape, and is pressed by using a flat iron block with a specific mass (500 g) for a particular time of 10 min, to minimize a gap between the sample to be tested and a copper foil. An edge is then trimmed with scissors, and the sample is adhered to a sample stage having a conductive adhesive to ensure that the sample slightly projects out of the edge of the sample stage. The morphology of the binder may be observed after a surface morphology picture of the sample to be tested is obtained by using SEM.

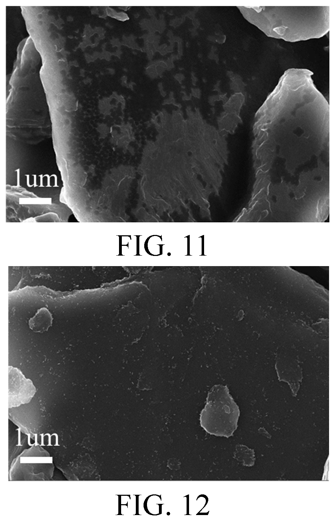

FIG. 11 is an SEM view of a second region of an embodiment of a negative electrode plate according to the present disclosure. FIG. 12 is an SEM view of a first region of an embodiment of a negative electrode plate according to the present disclosure. As shown in FIG. 11, a dotted binder provides bonding power between negative electrode active materials in a point contact manner, which is insufficient to effectively cover and protect surfaces of the negative electrode active materials and fails to effectively restrain expansion of the negative electrode active materials, ultimately leading to cycle degradation. A linear binder typically has a higher number of polar functional groups. During slurry mixing, the polar functional groups interact with aqueous solvents, so that the binder can be fully extended and coated on the surface of the negative electrode active material. As shown in FIG. 12, the coating of the linear second binder on the surface of the negative electrode active material can significantly enhance the binding strength between the negative electrode active materials as well as between a negative electrode film layer and a negative electrode current collector, thereby improving the internal cohesion of a negative electrode plate. However, the polar functional groups in the linear binder are also prone to form highly-polar hydrogen bonds with water molecules in the air. As a result, the cold-pressed electrode plate may absorb moisture in the air, leading to excessive thickness springback, thereby affecting processing performance such as cell casing and even compromising the cycle stability of the battery.

By using the linear first binder in the first region of the negative electrode film layer close to the current collector and the dotted second binder in the second region of the negative electrode film layer away from the current collector, a probability of the linear binder contacting moisture can be effectively reduced, thereby reducing a moisture absorption rate of the negative electrode plate, mitigating the increase in the thickness of the electrode plate caused by moisture absorption of the linear binder, fully leveraging the advantages of the linear binder, such as numerous polar functional groups and strong bonding, and achieving a low expansion rate of the electrode plate while reducing a defective product rate and a likelihood of significant deterioration in battery cycle stability.

In some embodiments, a weight-average molecular weight of the first binder is greater than a weight-average molecular weight of the second binder.

In this specification, the term "weight-average molecular weight" refers to the sum of products of weight fractions of molecules with different molecular weights in the polymer and corresponding molecular weights thereof.

In the present disclosure, the weight-average molecular weight of the binder may be tested by using any method known in the art, for example, gel chromatography, such as Waters 2695 Isostatic HPLC gel chromatograph (differential refractive detector 2141). A polystyrene solution sample with a mass percentage of 3.0% was used as a reference. A matched chromatographic column (oil-based: Styragel HT5DMF7.8*300 mm+Styragel HT4) was selected. A 3.0% binder glue solution was prepared by using a purified N-methylpyrrolidone (NMP) solvent. The prepared solution was stood for one day for future use. During the test, a syringe aspirated tetrahydrofuran for repeated flushing for many times. Then, 5 mL of a test solution was aspirated. Air in the syringe was expelled. A needle tip was wiped dry. Finally, the sample solution was slowly injected to a sample inlet. After displayed data are stable, the data are acquired and the weight-average molecular weight is read.

The linear first binder exhibits a higher weight-average molecular weight compared to the dotted second binder, thereby contributing to enhancing the cohesion of the negative electrode film layer and the bonding power between the negative electrode film layer and the current collector, further reducing the springback rate of the electrode plate after cold pressing and the expansion rate after full charging of the battery, and comprehensively improving the processing performance and cycle stability of the battery.

In some embodiments, a mass proportion of the first binder in the first region is greater than a mass proportion of the second binder in the second region. The mass proportion of the first binder in the first region refers to a mass percentage of the first binder based on a total mass of the negative electrode film layer in the first region. The mass proportion of the second binder in the second region refers to a mass percentage of the second binder based on a total mass of the negative electrode film layer in the second region.

In a slurry coating and drying process of the electrode plate, the binder close to the current collector tends to float up to the surface of the negative electrode film layer as a solvent evaporates. To be specific, the binder migrates from the first region of the electrode plate to the second region of the electrode plate, resulting in insufficient binder content in the first region of the electrode plate. Consequently, the cohesion of the negative electrode film layer and the bonding power between the negative electrode film layer and the current collector are significantly compromised. Simultaneously, the binder floating up is prone to clogging pore structures in the upper second region of the electrode plate, making it difficult for an electrolyte solution to infiltrate, and leading to insufficient battery kinetics. By setting that the mass proportion of the first binder in the first region is greater than the mass proportion of the second binder in the second region, the cohesion of the negative electrode film layer and the bonding power between the negative electrode film layer and the current collector are enhanced, the expansion of negative electrode active materials is restrained, and the cycle stability of the battery is improved. The pore clogging on the surface of the electrode plate can be reduced, and the kinetic performance of the battery is optimized.

In some embodiments, the first binder includes an acrylic binder. Additionally or alternatively, the second binder includes styrene-butadiene copolymer.

In this specification, the acrylic binder refers to a polymer primarily synthesized from acrylic monomers, which may exist as either a homopolymer or a copolymer. The acrylic monomers include acrylic acid and derivatives thereof.

In some embodiments, the acrylic binder includes at least one of polyacrylic acid, polymethacrylic acid, polymethyl acrylate, polyethyl methacrylate, polyhydroxyethyl methacrylate, polyhydroxyethyl acrylate, polyhydroxypropyl acrylate, polyhydroxypropyl methacrylate, polyhydroxyethyl acrylate, polypropyl methacrylate, polyethyl acrylate, and polymethyl methacrylate.

The acrylic binder has a plurality of polar functional groups and is a linear binder, allowing to fully extend in the solvent and coat the surface between the negative electrode active materials. The contact area is large, the springback of the electrode plate can be effectively reduced by bonding, and the cycle stability of the battery is enhanced.

In this specification, the "styrene-butadiene copolymer" refers to a polymer obtained through the copolymerization of butadiene monomers and styrene monomers.

In some embodiments, the weight-average molecular weight of the first binder is 500 to 1500. In some embodiments, the weight-average molecular weight of the first binder is 800 to 1000. The weight-average molecular weight of the second binder is 100 to 200.

In some embodiments, the weight-average molecular weight of the first binder is 500, 600, 700, 800, 900, 1000, 1100, 1200, 1300, 1400, or 1500, or any value in between.

In some embodiments, the weight-average molecular weight of the second binder is 100, 110, 120, 130, 140, 150, 160, 170, 180, 190, or 200, or any value in between.

In some embodiments, a mass proportion of the first binder in the first region is 1.0% to 3.0%. In some embodiments, the mass proportion of the first binder in the first region is 1.0% to 2.5%. Additionally or alternatively, a mass proportion of the second binder in the second region is 0.6% to 1.5%. In some embodiments, a mass proportion of the first binder in the first region is 0.6% to 1.2%.

The mass content of the binder in different regions of the negative electrode plate may be tested by using any method known in the art. As an example, a clean copper foil is laid flat on a table, and a negative electrode plate to be tested is cut into an electrode plate (20 cm × 10 cm). A clean blade is prepared. The electrode plate is pressed with the left hand, and the blade is held with the right hand. An angle of 45° is set between the blade and the electrode plate. Powder is scraped at the middle of the electrode plate from left to right over a length of 10 cm and a width of 5 cm. If a total of 10 scraping passes are required to expose the copper foil, the powder scraped from the first three passes is taken as a second region sample, and the powder scraped from the last three passes is taken as a first region sample. The collected samples are stored in sealed bottles. 50 mg of each collected sample is placed in an alumina crucible and spread evenly. The content of a binder in the sample is detected by using a thermogravimetric analyzer (under a nitrogen atmosphere with a flow rate of 20 mL/min). The temperature of the sample is raised from 25°C to 600°C at a rate of 10°C per min. The mass loss percentage of samples in different regions corresponds to the mass proportion of binders in different regions.

In some embodiments, a mass proportion of the first binder in the first region is 1.0%, 1.3%, 1.6%, 1.9%, 2.2%, 2.5%, 2.7%, 3.0%, or any value in between.

In some embodiments, a mass proportion of the second binder in the second region is 0.6%, 0.7%, 0.9%, 1.1%, 1.3%, 1.5%, or any value in between.

When the mass proportion of the first binder in the first region is 1.0% to 2.5%, the battery has both good cycle stability and kinetic performance.

When the mass proportion of the second binder in the second region is 0.6% to 1.2%, the battery has both good cycle stability and kinetic performance.

In some embodiments, a compaction density of the negative electrode film layer is 1.55 g/cm³ to 1.68 g/cm³.

In the present disclosure, the compaction density of the negative electrode film layer may be tested by using a method known in the art. As an example, a negative electrode plate with an area of S is weighed by using an electronic balance, and the weight is recorded as W1. A thickness of the negative electrode plate is measured by using a micrometer and recorded as T1. A film layer of the weighed electrode plate is then wiped off. The weight of a negative electrode current collector is calculated and recorded as W2. A thickness of the negative electrode current collector is measured by using the micrometer and recorded as T2. A compaction density (PD) of the negative electrode film layer is calculated as follows: $PD = \left(W1-W2\right) / \left[\left(T1-T2\right)\times S\right] .$

In some embodiments, the compaction density of the negative electrode film layer is 1.55 g/cm³, 1.58 g/cm³, 1.61 g/cm³, 1.64 g/cm³, 1.68 g/cm³, or any value in between.

In some embodiments, the negative electrode film layer includes a conductive agent. A mass proportion of the conductive agent is 0.4% to 2.0% based on the total mass of the negative electrode film layer.

In some embodiments, the mass proportion of the conductive agent is 0.4%, 0.6%, 0.8%, 1.0%, 1.2%, 1.4, 1.6%, 1.8%, 2.0%, or any value in between based on the total mass of the negative electrode film layer.

In some embodiments, the first region and/or the second region include graphite. It may be understood that the first region or the second region may include at least one graphite material. The first region and the second region may include the same or different graphite materials.

In some embodiments, a specific surface area of the graphite is 1.2 m²/g to 1.8 m²/g. In some embodiments, the specific surface area of the graphite is 1.25 m²/g to 1.70 m²/g.

In the present disclosure, the specific surface area of the graphite material may be tested by using a method known in the art. As an example, with reference to GB/T 19587-2017, a nitrogen adsorption specific surface area analysis test method may be used for testing, and a Brunauer Emmett Teller (BET) method is used for calculation. The test instrument may be a Tri-Star 3020 type specific surface area and pore size analysis tester available from Micromeritics company, the United States.

In some embodiments, the specific surface area of the graphite is 1.2 m²/g, 1.3 m²/g, 1.4 m²/g, 1.5 m²/g, 1.6 m²/g, 1.7 m²/g, 1.8 m²/g, or any value in between.

The low specific surface area of the graphite material contributes to a further reduction in side reactions of the graphite material and prolongs the cycle life of the secondary battery.

In some embodiments, a volume distribution particle size Dv50 of the graphite is 7.0 µm to 14.0 µm. In some embodiments, the volume distribution particle size Dv50 of the graphite is 9.0 µm to 12.0 µm.

In this specification, the term "volume distribution particle size Dv50" refers to a particle size at which a cumulative volume distribution of particles reaches 50% in a particle size distribution curve.

In the present disclosure, the volume distribution particle size Dv50 of the graphite material may be tested by using a method known in the art. As an example, with reference to GB/T 19077-2016, a laser particle size analyzer may be used for testing. The test instrument may be Model Mastersizer 3000 laser particle size analyzer of Malvern Instruments Inc., UK.

In some embodiments, the volume distribution particle size Dv50 of the graphite is 7.0 µm, 8.0 µm, 9.0 µm, 10.0 µm, 11.0 µm, 12.0 µm, 13.0 µm, 14.0 µm, or any value in between.

In some embodiments, a particle size distribution (Dv90-Dv10)/Dv50 of the graphite is 1.10 to 1.60. In some embodiments, the particle size distribution (Dv90-Dv10)/Dv50 of the graphite is 1.20 to 1.50.

In this specification, the terms "Dv90" and "Dv10" refer to particle sizes at which the cumulative volume distribution of particles reaches 90% and 10% in the particle size distribution curve respectively.

In the present disclosure, the volume distribution particle sizes Dv90 and Dv10 of the graphite material may be tested by using a method known in the art. As an example, with reference to GB/T 19077-2016, the laser particle size analyzer may be used for testing. The test instrument may be Model Mastersizer 3000 laser particle size analyzer of Malvern Instruments Inc., UK.

In some embodiments, the particle size distribution (Dv90-Dv10)/Dv50 of the graphite is 1.10, 1.15, 1.20, 1.25, 1.30, 1.35, 1.40, 1.50, 1.60, or any value in between.

Controlling the particle size distribution of the graphite material within the foregoing range contributes to enhancement of the close packing of the graphite material and the compaction density of the negative electrode plate. In other words, a lower cold pressing pressure is required to achieve the same compaction density of the negative electrode plate, thereby reducing a risk of cracking in the graphite material during cold pressing and further enhancing the integrity of the graphite material during processing. Additionally, a low internal stress within the particles of the graphite material contributes to maintenance of a long-term pore channel structure in the electrode plate during cycling, and can maintain an original pore structure of the electrode plate during cycling, thereby ensuring unimpeded lithium-ion intercalation paths while minimizing film re-formation of the graphite material during charging, and improving kinetic performance, cycle life, and storage stability. Furthermore, the particle size distribution within the foregoing range promotes evenness of lithium intercalation among the particles of the graphite material, reduces polarization, and prevents lithium plating caused by uneven current density, thereby achieving long-term cycle stability. In addition, the particle size distribution within the foregoing range also enhances the processability of the electrode plate, avoids impact on the evenness of slurry stirring caused by excessive fine particles in the graphite material, benefits the uniformity and stability of quality of the electrode plate, and implements long-cycle stability.

In some embodiments, a gram capacity of the graphite is 345 mAh/g to 355 mAh/g. In some embodiments, the gram capacity of the graphite is 347 mAh/g to 353 mAh/g.

In this specification, the term "gram capacity" refers to a ratio of an electric capacity released by an active material to the mass of the active material.

In the present disclosure, the gram capacity of the graphite may be tested by using a method known in the art. As an example, a graphite sample is thoroughly mixed with conductive agents such as carbon black and polyvinylidene fluoride (PVDF) at a mass ratio of 91.6:1.8:6.6 in a proper amount of solvent NMP, to form a uniform positive electrode slurry. The negative electrode slurry is uniformly coated onto a surface of a negative electrode current collector aluminum foil, dried, and cold-pressed. Subsequently, a CR2430 button battery is assembled in an argon-filled glove box using a lithium metal plate as a counter electrode and a polypropylene (PP) film as a separator. The electrolyte solution provided in the embodiments of the present disclosure is used. At 25°C, the prepared button battery is first discharged to 0.005 V at a constant current of 0.05 C, then further discharged to 0.005 V at a constant current of 10 µA, and allowed to rest for 5 min. A first-cycle discharge capacity of the button battery is recorded. Next, the button battery is charged to 2.0 V at a constant current of 0.1 C. A charge capacity of the button battery is recorded. A ratio of the charge capacity of the button battery to the mass of the graphite sample is the specific capacity of the graphite material.

In some embodiments, the gram capacity of the graphite is 345 mAh/g, 346 mAh/g, 347 mAh/g, 348 mAh/g, 349 mAh/, 350 mAh/g, 351 mAh/g, 352 mAh/g, 353 mAh/g, 354 mAh/g, 355 mAh/g, or any value in between.

The graphite material having the gram capacity within the foregoing range will not undergo significant lattice expansion due to excessive graphitization of the graphite material during charging and discharging. It will not be difficult to compact due to low graphitization of the graphite material, so that a higher cold pressing pressure is required to achieve the required compaction density of the electrode plate, thereby causing the graphite material to crack during cold pressing and consume too much active lithium once a new interface is generated during cycling. The graphite material having the gram capacity within the foregoing range can comprehensively prolong the cycle life of the secondary battery.

In some embodiments, a powder compaction density of the graphite under a pressure of 49000 N is less than or equal to 1.85 g/cm³. In some embodiments, the powder compaction density of the graphite under a pressure of 49000 N is 1.75 g/cm³ to 1.84 g/cm³.

In this specification, the term "powder compaction density" refers to the mass of powder particles per unit volume under a particular pressure.

In the present disclosure, the powder compaction density of an active material under a pressure of 49000 N may be tested by using a method known in the art. As an example, with reference to GB/T 24533-2009, 1 g of graphite material powder is weighed and placed into a mold with a base area of 1.327 cm². A pressure of 4900 kg (equivalent to 49000 N) is applied and maintained for 30 s, followed by pressure release and a 10-s hold period. The powder compaction density of the graphite material under a pressure of 49000 N is determined by using an electronic pressure testing machine (e.g., a UTM7305 model electronic pressure testing machine).

In some embodiments, the powder compaction density of the graphite under a pressure of 49000 N is 1.69 g/cm³, 1.72 g/cm³, 1.75 g/cm³, 1.78 g/cm³, 1.82 g/cm³, 1.85 g/cm³, or any value in between.

The graphite material having a powder compaction density within the foregoing range tends to maintain high particle integrity during cold pressing, and contributes to improvement of the cycle life of the secondary battery.

In some embodiments, a particle body of the graphite includes an internal region and a surface region at least partially enclosing the internal region. The surface region refers to a region extending 30 nm from a surface of the particle body to the interior of a particle. The surface region includes a disordered layer.

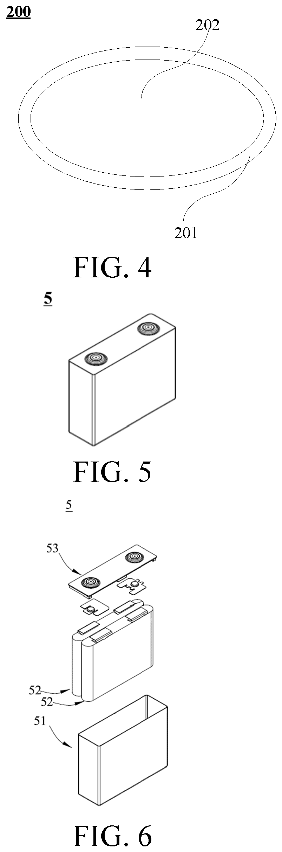

FIG. 4 is a schematic diagram of a cross-sectional image of a particle of a graphite material 200 according to the present disclosure. As shown in FIG. 4, a region extending 30 nm from a surface of a particle body of a graphite material 200 toward the interior is defined as a surface region 201. A region inside the surface region 201 is defined as an internal region 202. The surface region 201 includes a disordered layer.

The disordered layer may be tested by using transmission electron microscopy (TEM). A slice with a thickness of approximately 20 to 50 nm is sectioned from the middle of the particle body of the graphite material by using a focused ion beam (FIB). Subsequently, TEM testing of the slice reveals that the surface region includes a disordered layer, which exhibits distinct TEM morphology, lattice fringes, and electron diffraction patterns compared to the internal region. The electron diffraction pattern of the disordered layer appears as a halo ring.

In some embodiments, a thickness of the disordered layer is 1 nm to 20 nm.

In the present disclosure, a thickness of the disordered layer may be tested by using a method known in the art. As an example, the thickness may be obtained by TEM testing. A slice with a thickness of approximately 20 to 50 nm is sectioned from the middle of the particle body of the graphite material by using an FIB. Subsequently, TEM testing of the slice obtains an original TEM testing picture. The original picture obtained by the TEM testing is opened in a Digital Micrograph software. A disordered layer is recognized through diffraction fringes or lattice spacing. The thickness of the disordered layer is measured. Typically, the disordered layer exhibits no diffraction fringes and possesses a larger lattice spacing than an ordered layer.

In some embodiments, the thickness of the disordered layer is 1 nm, 2 nm, 3 nm, 4 nm, 5 nm, 6 nm, 7 nm, 8 nm, 9 nm, 10 nm, 11 nm, 12 nm, 13 nm, 14 nm, 15 nm, 16 nm, 17 nm, 18 nm, 19 nm, 20 nm, or any value in between.

The disordered layer mainly includes amorphous carbon. An irregular arrangement of carbon atoms in the amorphous carbon structure makes an intermolecular interaction force more complex, thereby achieving a higher strength and hardness compared to graphite crystal in the internal region, reducing a probability of particle surface damage caused by friction between particles and between a particle and a stirring tank during slurry preparation, and reducing a risk of particle cracking and new interface exposure of the graphite material during the cold pressing of the electrode plate, so that the graphite material maintains a higher particle integrity during manufacturing. The graphite material having a high particle integrity has fewer surface defects and a good interface with the electrolyte solution, which can effectively reduce the side reactions between the negative electrode plate and the electrolyte solution, reduce the loss of active lithium, and is beneficial to enhancement of battery storage stability and cycle stability. Also, the disordered layer on the graphite material is beneficial to enhancement of the infiltration between the electrolyte solution and the negative electrode plate and enhancement of the kinetic performance of the battery.

Different from the disordered layer coated on the surface of the graphite material in the related art, the disordered layer of the graphite material provided in this embodiment of the present disclosure is located in the particle body of the graphite material, which is derived from the same raw material as the graphite material, and is not prepared by post-processing. Therefore, the graphite material has better material consistency than the graphite material provided with the disordered layer obtained by surface coating treatment, so that the battery exhibits a longer cycle life, thereby balancing battery kinetic performance, cycle stability, and storage stability. It is especially suitable for energy storage batteries that have extremely high requirements for cycle life and storage life.

In some embodiments, the graphite includes both primary particles and secondary particles. In some embodiments, a quantity proportion of the secondary particles is less than or equal to 50% based on a total quantity of the primary particles and the secondary particles.

In this specification, the term "primary particle" refers to a non-agglomerated particle.

In this specification, the term "secondary particle" refers to an agglomerated particle composed of two or more primary particles.

The primary particles and the secondary particles may be distinguished by observing cross-sections of graphite material particles using the SEM. In the present disclosure, a quantity proportion of secondary particles in the graphite material may be tested by using a method known in the art. As an example, a cross-section of a negative electrode plate may be prepared by using a cross-section polisher (e.g., a Japanese JEOL IB-09010 CP argon ion cross-section polisher). With reference to JY/T010-1996, the cross-section of the negative electrode plate is then scanned by using an SEM (e.g., a Germany ZEISS Sigma 300-model SEM). A plurality of test regions are randomly selected from the test sample, and images of the plurality of test regions are captured by using the SEM. The percentage of graphite material particles exhibiting secondary particle morphology relative to a total number of graphite material particles in each image is counted. An average of a plurality of statistical results is the quantity proportion of secondary particles in the graphite material.

In some embodiments, the graphite includes both primary particles and secondary particles. A quantity proportion of the secondary particles is 50%, 40%, 30%, 20%, 10%, or any value in between based on a total quantity of the primary particles and the secondary particles.

For the graphite material having a low quantity proportion of secondary particles, the particle integrity of the graphite material can be maintained during battery preparation, the formation of new interfaces is reduced, the consumption of active lithium during cycling is reduced, and the cycle stability of the secondary battery is further enhanced. Additionally, a particular quantity of secondary particles can reduce the expansion of the negative electrode plate while maintaining the kinetic performance of the secondary battery, thereby enabling a cell to have a kinetic window throughout a full life cycle, preventing a sharp decline in battery capacity and a rapid deterioration of battery life due to lithium plating caused by uneven current distribution, and comprehensively improving the cycle stability of the battery.

In some embodiments, a graphitization degree of the graphite is 92.0% to 94.0%.

In this specification, the term "graphitization degree" refers to an indicator measuring the extent to which carbon atoms form a closely packed hexagonal graphite crystal structure.

In the present disclosure, the graphitization degree of the graphite material may be tested by using a method known in the art. As an example, high-purity silicon powder (purity ≥ 99.99%) is used as an internal standard for calibration. The sample is prepared by mixing the graphite material and silicon at a weight ratio of 5:1, grinding the mixture uniformly, and then tableting. The test is conducted by using an X-ray diffractometer (e.g., Bruker D8 Discover). With reference to JIS K 0131-1996 and JB/T 4220-2011, an average interlayer spacing d002 of a (002) crystal plane in a graphite material crystal structure is obtained, and the graphitization degree is calculated according to the formula: g=(0.344-d002)/(0.344-0.3354)×100%. In the foregoing formula, d002 represents the average interlayer spacing (in nm) of the (002) crystal plane in the graphite material crystal structure.

In some embodiments, the graphitization degree of the graphite is 92%, 92.2%, 92.4%, 92.6%, 92.8%, 93%, 93.2%, 93.4%, 93.6%, 93.8%, 94%, or any value in between.

The graphite material having the graphitization degree within the foregoing range can achieve a balance between cycle stability and high capacity.

In some embodiments, I_{D}/I_{G} of the graphite material is 0.05 to 0.10, where I_{D}/I_{G} is a ratio of a D peak intensity to a G peak intensity by Raman spectroscopy, I_{D} represents the D peak intensity at 1350±100 cm⁻¹, and I_{G} represents the G peak intensity at 1580±100 cm⁻¹.

In the present disclosure, the I_{D}/I_{G} of the graphite material may be tested by using any well-known mode of Raman spectroscopy. As an example, with reference to GB/T 40219-2021, the test may be conducted by using an InVia Qontor (Reflex)-model Raman spectrometer. A solid-state laser with a wavelength of 523 nm is used as a light source. Measurements are taken at 100 points within a region (100 µm × 100 µm). A median of I_{D}/I_{G} is used as the I_{D}/I_{G} of the graphite material, where the median refers to a middle value in collected I_{D}/I_{G} data arranged in order of size.

In some embodiments, the I_{D}/I_{G} of the graphite material is 0.05, 0.06, 0.07, 0.08, 0.09, 0.10, or any value in between.

I_{D}/I_{G} of the graphite material may be used to characterize a surface disorder degree of the graphite material. Unlike an active material with a disordered layer coated onto the surface of a graphite particle body, the graphite material provided in the embodiments of the present disclosure has a surface disordered layer while maintaining a low surface disorder degree. The disordered layer in the active material with the disordered layer coated onto the surface of the graphite particle body typically originates from coated organic carbon, and a carbonized disordered layer has a high surface disorder degree. In contrast, the disordered layer structure in the surface region of the graphite material provided in the embodiments of the present disclosure derives from the same precursor as other parts of the graphite material. Moreover, the disordered layer has a high evenness and an ultra-small thickness, resulting in a low surface disorder degree. This configuration allows the graphite material to leverage the advantages of the disordered layer, enhancing the kinetic performance of the battery, while avoiding excessive side reactions caused by an excessively disordered material surface, thereby enhancing the kinetic performance of the battery without compromising the cycle stability of the battery.

In the present disclosure, the type of the secondary battery is not specifically limited. For example, the secondary battery may be a lithium-ion battery. Generally, the secondary battery includes a positive electrode plate, a negative electrode plate, an electrolyte, and the like. During the charging and discharging of the secondary battery, active ions are reversibly intercalated into and deintercalated from the positive electrode plate and the negative electrode plate, while the electrolyte facilitates the conduction of the active ions between the positive electrode plate and the negative electrode plate. The type of the electrolyte is not specifically limited in the present disclosure and may be selected according to actual requirements. For example, the electrolyte may be at least one of a solid electrolyte or a liquid electrolyte (i.e., electrolytic solution). A secondary battery using an electrolytic solution, as well as some secondary batteries using solid electrolytes, may further include a separator. The separator is disposed between the positive electrode plate and the negative electrode plate to provide isolation.

The present disclosure further provides a method for preparing a graphite material, including the following steps: providing a raw material; processing the raw material to obtain an intermediate product; and graphitizing the intermediate product to obtain a graphite material. A particle body of the graphite material includes an internal region and a surface region at least partially enclosing the internal region. The surface region refers to a region extending 30 nm from a surface of the particle body of the graphite material to the interior of a particle. The surface region includes a disordered layer.

In this specification, the term "graphitizing" refers to a heat treatment process of a carbon material. Under a high temperature, for the carbon material, a two-dimensional structure of a carbon network transforms into a three-dimensional ordered structure through the growth of "crystallites".

In some embodiments, a maximum power applied during graphitizing is 70% to 90% of a rated power of a graphitizing device.

In some embodiments, the maximum power applied during graphitizing may optionally be 70%, 75%, 80%, 85%, 90%, or any value in between of the rated power of the graphitizing device. It may be understood that the graphitizing apparatus refers to any apparatus capable of graphitizing, including but not limited to an Acheson furnace, a chamber furnace, an internal series furnace, a continuous graphitization, an electric calcination furnace, a medium-frequency furnace, and a tube furnace. The rated power of the graphitizing device produced by different manufacturers may vary and may be selected according to actual conditions. The maximum power applied during graphitizing used in the present disclosure is maintained below the rated power of the graphitizing apparatus to implement evenness of a thermal field during graphitizing.

The maximum power applied during graphitizing used in the present disclosure is maintained below the rated power of the graphitizing device to implement evenness of a thermal field during graphitizing.

In some embodiments, the graphitizing device is an internal series furnace, where the rated power of the internal series furnace is 25000 to 32000 W. A graphitizing time may be 10 h to 30 h. In some embodiments, the graphitizing time may be 15 h to 25 h.

In some embodiments, the graphitizing device is an Acheson furnace, where the rated power of the Acheson furnace is 28000 to 30000 W. The graphitizing time may be 30 h to 50 h. In some embodiments, the graphitizing time may be 40 h to 50 h.

In some embodiments, the maximum power applied during graphitizing is 22000 W to 25000 W.

In some embodiments, the maximum power applied during graphitizing may optionally be 22000 W, 22500 W, 23000 W, 23500 W, 24000 W, 25000 W, or any value in between.

Controlling the maximum power applied during graphitizing effectively regulates the graphitization degree of the graphite material during heat treatment. The internal region of the particle of the graphite material is highly graphitized, while an even disordered layer is formed on the body surface, thereby contributing to improved cycle stability of the secondary battery.

In some embodiments, a graphitizing temperature is 2600°C to 3000°C.

In some embodiments, the graphitizing temperature is 2600°C, 2700°C, 2800°C, 2900°C, 3000°C, or any value in between.

An appropriate graphitizing temperature and an appropriate graphitizing time help prevent excessive rearrangement of a precursor, which leads to an excessively high specific surface area of the graphitized graphite material and degrades the high-temperature performance. Also, the graphitization degree of the graphite material can be effectively improved, thereby improving both the high-temperature storage performance and cycle life of the secondary battery.

In some embodiments, the raw material includes at least one of petroleum coke, needle coke, or pitch coke. In some embodiments, the raw material is needle coke.

In this specification, the term "petroleum coke" refers to coke formed by high-temperature carbonization of petroleum residue or petroleum asphalt.

In this specification, the term "needle coke" refers to coke with a needle-like texture, produced from coal tar pitch or petroleum asphalt through liquid-phase carbonization that forms an anisotropic mesophase, followed by high-temperature carbonization.

In this specification, the term "pitch coke" refers to a solid material produced from high-temperature carbonization of coal tar pitch.

The needle coke has a series of advantages such as low thermal expansion coefficient, low porosity, low sulfur, low ash content, low metal content, high electrical conductivity, and ease of graphitization. The graphitized graphite material achieves a high maximum compaction density and has a low cycle expansion rate.

In some embodiments, a volume proportion of a fibrous structure in the raw material is greater than or equal to 55% based on a total structural volume of the raw material. In some embodiments, the volume proportion of the fibrous structure in the raw material is 58% to 70% based on the total structural volume of the raw material.

In this specification, the "fibrous structure" (also known as a streamlined structure) refers to a structure of the raw material having an obvious fibrous texture observed under a microscope.

Based on morphological features of the raw material and the size of isochromatic regions under polarized light microscopy, microstructures are generally classified as mosaic-type, domain-type, or fibrous. The isochromatic region microstructures not less than 30 µm are generally determined as mosaic-type. The isochromatic region microstructures greater than 30 µm are determined as domain-type, and anisotropic stripped isochromatic regions are determined as fibrous structures.

In the present disclosure, the volume proportion of the fibrous structure in the raw material may be tested by using a method known in the art. As an example, with reference to GB 1997-89, a raw material is used, crushed to 1 mm, and blended, to obtain a sample of 40 g to 50 g through division. Using a square-hole sieve, 4 to 5 g of sample with a particle size between 0.07 mm and 1.0 mm is sieved for polished section preparation. With reference to MT 116.1-86, powdered coke and lump coke polished sections are prepared. The diameter of the powdered coke polished section is required to be not less than 22 mm, where the volume occupied by cement should be less than 1/3. The sample is placed on a slide with cement, flattened, and located on a microscope stage for focusing. After calibrating the microscope, a polarizer and an analyzer are adjusted to achieve an orthogonal state. A gypsum test plate (1 λ) is inserted to produce a first-order red interference color in the field of view. A moving step size is determined to ensure even distribution of at least 400 effective measurement points. A point spacing of 0.3 to 0.5 mm and a line spacing of 0.5 to 0.8 mm are generally recommended. Starting from one end of the sample, a microstructure category under a crosshair intersection point is determined. The volume proportion of the fibrous structure in the raw material is calculated by dividing total test points counted by the number of effective points of an optical texture of the fibrous structure.

In some embodiments, the volume proportion of the fibrous structure in the raw material is optionally 55%, 58%, 60%, 65%, 70%, or any value in between based on the total structural volume of the raw material.

The raw material with a higher proportion of fibrous structures help improve the compaction density and gram capacity of the graphite material, so that the graphite material maintains a high integrity during compaction, and the battery has a long cycle life and a high energy density. However, an excessively high proportion of fibrous structures may increase the cost and expansion rate of the graphite material, and deteriorate the kinetic performance. The raw material having the volume proportion of the fibrous structure within the foregoing range has a low cost, and enables the graphite to have a high gram capacity. The cell has a full-life cycle kinetic window, thereby comprehensively improving the long-term cycle life and electrochemical behavior of the battery.

In some embodiments, a maximum achievable gram capacity of the raw material is greater than the gram capacity of the graphite material.

Using high-grade raw materials while controlling the graphitization degree prevents the full realization of the maximum achievable gram capacity of the raw material, to obtain a graphite material with a disordered layer in a surface region, thereby balancing battery cycle life with kinetic performance.

In some embodiments, the processing the raw material includes: crushing, shaping, and classifying the raw material, to obtain a first precursor; granulating the first precursor to obtain a second precursor; and carbonizing a mixture of the first precursor and the second precursor at a low temperature, to obtain the intermediate product.

Crushing is a process of reducing the particle size of the raw material. The raw material may be crushed by using any mechanical apparatus such as a crusher or a mechanical mill.

Shaping and classifying are a process of adjusting the particle size distribution of the raw material, to obtain the first precursor that meets a particle size requirement. Classification frequency and air intake may be adjusted to control the particle size and particle size distribution of the first precursor.

It should be noted that the carbonizing the first precursor and the second precursor at a low temperature to obtain the intermediate product may include: carbonizing the mixture of the first precursor and the second precursor at a low temperature to obtain the intermediate product; and carbonizing the first precursor and the second precursor at a low temperature respectively, to obtain a first intermediate product and a second intermediate product respectively.

In some embodiments, a particle size Dv50 of the first precursor is 6.5 µm to 10.0 µm.

In some embodiments, the particle size Dv50 of the first precursor is 6.5 µm, 7.0 µm, 8.0 µm, 9.0 µm, 10.0 µm, or any value in between.

In some embodiments, a particle size distribution (Dv90-Dv10)/Dv50 of the first precursor is 1.05 to 1.75.

In some embodiments, the particle size distribution (Dv90-Dv10)/Dv50 of the first precursor is 1.05, 1.15, 1.25, 1.35, 1.45, 1.55, 1.65, 1.75, or any value in between.

In some embodiments, a tap density of the first precursor is 0.5 g/cm³ to 0.7 g/cm³.

In this specification, the term "tap density" refers to the mass per unit volume of a powder measured in a container under specified conditions after being subjected to tapping.

In the present disclosure, the tap density of the first precursor may be tested by using a method known in the art. As an example, with reference to GB/T 5162-2006, a powder tap density tester may be used for testing. The tester may be a Dandong Bettersize BT-301, having the following test parameters: vibration frequency: 250±15 taps/minute, amplitude: 3±0.2 mm, number of vibrations: 5000 taps, and measuring cylinder: 25 mL.

In some embodiments, the tap density of the first precursor is 0.5 g/cm³, 0.55 g/cm³, 0.6 g/cm³, 0.65 g/cm³, 0.7 g/cm³, or any value in between.

In some embodiments, a particle size Dv50 of the second precursor is 11.0 µm to 14.0 µm.

In some embodiments, the particle size Dv50 of the second precursor is 11.0 µm, 12.0 µm, 13.0 µm, 14.0 µm, or any value in between.

The secondary precursor is obtained by granulating the primary precursor. Therefore, the secondary precursor primarily contributes to the formation of secondary particles in the graphite material.

Controlling the particle sizes of both the primary precursor and the secondary precursor enables regulation of the particle size and particle size distribution of the graphite material, thereby enhancing the cycle stability of the battery.

In some embodiments, the crushing, shaping, and classifying the raw material to obtain a first precursor includes: crushing, shaping, and classifying the raw material, to obtain a secondary raw material; and removing fine powder accounting for 10% to 35% of the total mass of the secondary raw material in the secondary raw material, to obtain the first precursor. The fine powder has a Dv50 of 3 µm to 7 µm and a Dv99 less than or equal to 30 µm.

In some embodiments, the particle size distribution (Dv90-Dv10)/Dv50 of the fine powder is greater than 1.50.

In some embodiments, a low-temperature carbonization temperature is 900°C to 1300°C, and a low-temperature carbonization time is 24 h to 240 h.

In some embodiments, the low-temperature carbonization temperature is optionally 900°C, 1000°C, 1100°C, 1200°C, 1300°C, or any value in between.

In some embodiments, the low-temperature carbonization time is optionally 24 h, 50 h, 75 h, 100 h, 150 h, 200 h, 240 h, or any value in between.

### [Negative Electrode Plate]

In some embodiments, the negative electrode plate includes a negative electrode current collector and a negative electrode film layer arranged on at least one surface of the negative electrode current collector. For example, the negative electrode current collector has two opposite surfaces in a thickness direction thereof. The negative electrode film layer is provided on either or both of the two opposite surfaces of the negative electrode current collector.

As shown in FIG. 1 to FIG. 3, the negative electrode film layer 102 further includes a middle region 1023 that is located between the first region 1021 of the negative electrode film layer and the second region 1022 of the negative electrode film layer and that has a thickness of 0.4H (where H represents the thickness of the negative electrode film layer 102).

In some embodiments, the middle region includes the first binder and/or the second binder. For example, as shown in FIG. 2, the middle region 1023 may be the same as the first region 1021 in composition. In this way, a distribution region of the first binder in the thickness direction of the negative electrode film layer 102 is within a thickness range from the second surface 102b of the negative electrode film layer to 0.7H. Alternatively, as shown in FIG. 3, the middle region 1023 may be the same as the second region 1022 in composition. In this way, a distribution region of the second binder in the thickness direction of the negative electrode film layer 102 is within a thickness range from the first surface 102a of the negative electrode film layer to 0.7H. Alternatively, as shown in FIG. 1, the middle region 1023 includes both a first binder and a second binder. In this case, the middle region 1023 includes both a layer structure having the first binder and a layer structure having the second binder. The foregoing two layers may further have a layer interface.

In some embodiments, the negative electrode film layer may further include another negative electrode active material other than the foregoing active material. In some embodiments, the another negative electrode active material may include, but is not limited to, at least one of conventional natural graphite, another artificial graphite, soft carbon, hard carbon, a silicon-based material, a tin-based material, and lithium titanate. The silicon-based material may include one or more of elemental silicon, silicon oxide, a silicon-carbon composite, a silicon-nitrogen composite, and a silicon alloy material. The tin-based material may include one or more of elemental tin, tin oxide, and a tin alloy material.

In some embodiments, the negative electrode film layer may further optionally include other additives. As an example, the other additives may include a thickener, for example, sodium carboxymethyl cellulose (CMC) or a PTC thermistor material.

In some embodiments, the negative electrode current collector may be a metal foil or a composite current collector. Examples of the metal foil may include a copper foil. The composite current collector may include a high molecular material base layer and a layer of a metal material formed on at least one surface of the high molecular material base layer. As an example, the metal material may include one or more of copper, copper alloy, nickel, nickel alloy, titanium, titanium alloy, silver, and silver alloy. As an example, the high molecular material base layer may include one or more of polypropylene (PP), polyethylene terephthalate (PET), polybutylene terephthalate (PBT), polystyrene (PS), and polyethylene (PE).

The negative electrode film layer is usually formed by applying a negative electrode slurry on the negative electrode current collector, and drying and cold pressing the negative electrode slurry. The negative electrode slurry is usually formed by dispersing the negative electrode active material, an optional conductive agent, an optional binder, and other optional additives in a solvent and performing stirring uniformly. The solvent may be, but is not limited to, N-methylpyrrolidone (NMP) or deionized water.

In the negative electrode plate, other additional functional layers other than the negative electrode film layer are not excluded. For example, in some embodiments, the negative electrode plate according to the present disclosure further includes a conductive primer layer (which is, for example, formed by a conductive agent and a binder) sandwiched between the negative electrode current collector and the negative electrode film layer and disposed on the surface of the negative electrode current collector. In some embodiments, the negative electrode plate according to the present disclosure further includes a protective layer covering the surface of the negative electrode film layer.

### [Positive Electrode Plate]

In some embodiments, the positive electrode plate includes a positive electrode current collector and a positive electrode film layer arranged on at least one surface of the positive electrode current collector. For example, the positive electrode current collector has two opposite surfaces in a thickness direction thereof. The positive electrode film layer is provided on either or both of the two opposite surfaces of the positive electrode current collector.

The positive electrode current collector may be a metal foil or a composite current collector. Examples of the metal foil may include an aluminum foil. The composite current collector may include a high molecular material base layer and a layer of a metal material formed on at least one surface of the high molecular material base layer. As an example, the metal material may include one or more of aluminum, aluminum alloy, nickel, nickel alloy, titanium, titanium alloy, silver, and silver alloy. As an example, the high molecular material base layer may include one or more of polypropylene (PP), polyethylene terephthalate (PET), polybutylene terephthalate (PBT), polystyrene (PS), and polyethylene (PE).

The positive electrode film layer generally includes a positive electrode active material, an optional binder, and an optional conductive agent. The positive electrode film layer is usually formed by applying a positive electrode slurry on the positive electrode current collector, and drying and cold pressing the positive electrode slurry. The positive electrode slurry is usually formed by dispersing the positive electrode active material, an optional conductive agent, an optional binder, and any other components in a solvent and performing stirring uniformly. The solvent may be, but is not limited to, N-methyl pyrrolidone (NMP). As an example, the binder for the positive electrode film layer may include one or more of polyvinylidene fluoride (PVDF), polytetrafluoroethylene (PTFE), vinylidene fluoride-tetrafluoroethylene-propylene terpolymer, vinylidene fluoride-hexafluoropropylene-tetrafluoroethylene terpolymer, tetrafluoroethylene-hexafluoropropylene copolymer, and fluorine-containing acrylate resin. As an example, the conductive agent for the positive electrode film layer may include one or more of superconducting carbon, conductive graphite, acetylene black, carbon black, Ketjen black, carbon dots, carbon nanotubes, graphene, and carbon nanofibers.

The positive electrode active material may be a positive electrode active material for a secondary battery well known in the art.

When the secondary battery according to the present disclosure is a lithium-ion battery, the positive electrode active material the positive electrode active material may include, but is not limited to, one or more of lithium transition metal oxide, a lithium-containing phosphate, and respective modified compounds thereof. Examples of the lithium transition metal oxide may be, but are not limited to, one or more selected from the group consisting of lithium cobalt oxide, lithium nickel oxide, lithium manganese oxide, lithium nickel cobalt oxide, lithium manganese cobalt oxide, lithium nickel manganese oxide, lithium nickel cobalt manganese oxide, lithium nickel cobalt aluminum oxide, and respective modified compounds thereof. Examples of the lithium-containing phosphate may include, but are not limited to, one or more of lithium iron phosphate, a composite material of lithium iron phosphate and carbon, lithium manganese phosphate, a composite material of lithium manganese phosphate and carbon, lithium manganese iron phosphate, a composite material of lithium manganese iron phosphate and carbon, and respective modified compounds thereof.

In some embodiments, to further improve the energy density of the secondary battery, the positive electrode active material for the lithium-ion battery may be one or more selected from the group consisting of lithium transition metal oxide represented by a general formula LiₐNi_{b}Co_{c}M_{d}OₑA_{f} and modified compounds thereof. 0.8≤a≤1.2, 0.5≤b<1, 0<c<1, 0<d<1, 1≤e≤2, 0≤f≤1, M is one or more selected from the group consisting of Mn, Al, Zr, Zn, Cu, Cr, Mg, Fe, V, Ti, and B, and A is one or more selected from the group consisting of N, F, S and Cl.

In some embodiments, as an example, the positive electrode active material for the lithium-ion battery may include, but is not limited to, one or more of LiCoO₂, LiNiO₂, LiMnO₂, LiMn₂O₄, LiNi_{1/3}Co_{1/3}Mn_{1/3}O₂(NCM333), LiNi_{0.5}Co_{0.2}Mn_{0.3}O₂(NCM523), LiNi_{0.6}Co_{0.2}Mn_{0.2}O₂(NCM622), LiNi_{0.8}Co_{0.1}Mn_{0.1}O₂(NCM811), LiNi_{0.85}Co_{0.15}Al_{0.05}O₂, LiFePO₄, and LiMnPO₄.

In the present disclosure, the modified compounds of the positive electrode active material may be obtained by performing doping modification and/or surface coating modification on the positive electrode active material.

### [Electrolyte]

In some embodiments, the electrolyte may be an electrolyte solution. The electrolyte solution includes an electrolyte salt and a solvent.

The type of the electrolyte salt is not specifically limited, and may be selected according to actual requirements.

When the secondary battery according to the present disclosure is a lithium-ion battery, as an example, the electrolyte salt may include one or more of lithium hexafluorophosphate (LiPF₆), lithium tetrafluoroborate (LiBF₄), lithium perchlorate (LiClO₄), lithium hexafluoroarsenate (LiAsF₆), lithium bis(fluorosulfonyl)imide (LiFSI), lithium bis(trifluoromethanesulfonyl)imide (LiTFSI), lithium trifluoromethanesulfonate (LiTFS), lithium difluorooxalate borate (LiDFOB), lithium bis(oxalato)borate (LiBOB), lithium difluorophosphate (LiPO₂F₂), lithium difluorobis(oxalato)phosphate (LiDFOP), and lithium tetrafluoro(oxalato)phosphate (LiTFOP).

The type of the solvent is not specifically limited, and may be selected according to actual requirements. In some embodiments, as an example, the solvent may include one or more of ethylene carbonate (EC), propylene carbonate (PC), ethyl methyl carbonate (EMC), diethyl carbonate (DEC), dimethyl carbonate (DMC), dipropyl carbonate (DPC), methyl propyl carbonate (MPC), ethyl propyl carbonate (EPC), butylene carbonate (BC), fluoroethylene carbonate (FEC), methyl formate (MF), methyl acetate (MA), ethyl acetate (EA), propyl acetate (PA), methyl propionate (MP), ethyl propionate (EP), propyl propionate (PP), methyl butyrate (MB), ethyl butyrate (EB), 1,4-butyrolactone (GBL), sulfolane (SF), dimethyl sulfone (MSM), ethyl methyl sulfone (EMS), and diethyl sulfone (ESE).

In some embodiments, the electrolyte solution further optionally includes an additive. For example, the additive may include a negative electrode film-forming additive, a positive electrode film-forming additive, or an additive capable of improving certain performance of the secondary battery, such as an additive capable of improving overcharging performance of the secondary battery, an additive capable of improving high temperature performance of the secondary battery, or an additive capable of improving low temperature power performance of the secondary battery.

### [Separator]

The type of the separator is not particularly limited in the present disclosure, and any well-known separator with a porous structure having good chemical stability and mechanical stability may be selected.

In some embodiments, a material of the separator may be one or more selected from glass fiber, non-woven fabric, polyethylene, polypropylene, and polyvinylidene fluoride. The separator may be a single-layer film, or may be a multilayer composite film. When the separator is a multilayer composite film, materials of the layers are the same or different.

In some embodiments, the positive electrode plate, the separator, and the negative electrode plate may be wound or laminated to form an electrode assembly.

In some embodiments, the secondary battery may include an outer package. The outer package may be used to encapsulate the foregoing electrode assembly and electrolyte.

In some embodiments, the outer package may be a hard shell, such as a hard plastic shell, an aluminum shell, or a steel shell. The outer package may alternatively be a soft pack, for example, a pouch type soft pack. The material of the soft pack may be plastic, for example, one or more of polypropylene (PP), polybutylene terephthalate (PBT), and polybutylene succinate (PBS).

A shape of the secondary battery is not particularly limited in the present disclosure. The secondary battery may be cylindrical, square, or of any other shape. For example, FIG. 5 shows a secondary battery 5 having a square structure as an example.

In some embodiments, as shown in FIG. 6, the outer package may include a case 51 and a cover plate 53. The case 51 may include a bottom plate and a side plate connected to the bottom plate. The bottom plate and the side plate enclose an accommodating cavity. The case 51 has an opening in communication with the accommodating cavity. The cover plate 53 is configured to cover the opening to close the accommodating cavity. The positive electrode plate, the negative electrode plate, and the separator may be wound or laminated to form an electrode assembly 52. The electrode assembly 52 is encapsulated in the accommodating cavity. The electrolyte solution infiltrates into the electrode assembly 52. One or more electrode assemblies 52 may be included in the secondary battery 5, and the quantity may be adjusted according to requirements.

A method for preparing the secondary battery according to the present disclosure is well-known. In some embodiments, the positive electrode plate, the separator, the negative electrode plate, and the electrolyte solution may be assembled into a secondary battery. As an example, the positive electrode plate, the separator, and the negative electrode plate may be wound or laminated to form an electrode assembly. The electrode assembly is placed in an outer package and dried, followed by the injection of the electrolyte solution and processes such as vacuum encapsulation, standing, formation, aging, and the like, to obtain a secondary battery.

In some embodiments of the present disclosure, the secondary battery according to the present disclosure may be assembled into a battery module, a plurality of secondary batteries may be included in the battery module, and a specific quantity may be adjusted based on application and a capacity of the battery module.

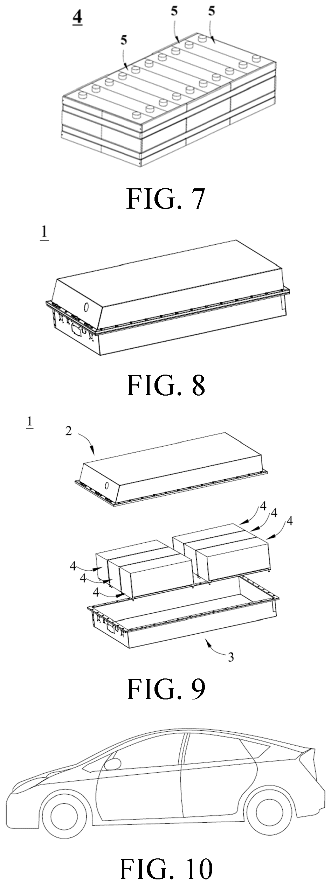

FIG. 7 is a schematic diagram of a battery module 4 as an example. As shown in FIG. 7, in the battery module 4, a plurality of secondary batteries 5 may be sequentially arranged in a length direction of the battery module 4. The secondary batteries may alternatively be arranged in any other manner. The plurality of secondary batteries 5 may further be fixed through a fastener.

Optionally, the battery module 4 may further include a shell with an accommodating space. The plurality of secondary batteries 5 are accommodated in the accommodating space.

In some embodiments, the battery modules may further form a battery pack. The quantity of battery modules included in the battery pack may be adjusted based on application and the capacity of the battery pack.

FIG. 8 and FIG. 9 are schematic diagrams of a battery pack 1 as an example. As shown in FIG. 8 and FIG. 9, the battery pack 1 may include a battery box and a plurality of battery modules 4 disposed in the battery box. The battery box includes an upper box 2 and a lower box 3. The upper box 2 is configured to cover the lower box 3 to form a closed space for accommodating the battery modules 4. The plurality of battery modules 4 may be arranged in the battery box in any way.

The present disclosure further provides a power consuming apparatus. The power consuming apparatus includes at least one of the secondary battery, the battery module, or the battery pack according to the present disclosure. The secondary battery, the battery module, or the battery pack may be used as a power supply of the power consuming apparatus, and may alternatively be used as an energy storage unit of the power consuming apparatus. The power consuming apparatus may be, but is not limited to, a mobile device (e.g., a mobile phone, a tablet, or a laptop), an electric vehicle (e.g., a pure electric vehicle, a hybrid electric vehicle, a plug-in hybrid electric vehicle, an electric bicycle, an electric scooter, an electric golf cart, or an electric truck), an electric train, a ship and a satellite, an energy storage system, or the like.

The power consuming apparatus may select a secondary battery, a battery module, or a battery pack based on a use requirement of the power consuming apparatus.

FIG. 10 is a schematic diagram of a power consuming apparatus as an example. The power consuming apparatus is an all-electric vehicle, a hybrid electric vehicle, a plug-in hybrid electric vehicle, or the like. To meet requirements of the power consuming apparatus for high power and high energy density, a battery pack or a battery module may be used.

For another example, the power consuming apparatus may be a mobile phone, a tablet, a laptop, or the like. The power consuming apparatus is generally required to be light and thin, and may use a secondary battery as a power supply.

### Embodiments

The following embodiments provide a more specific description of the content disclosed in the present disclosure. These embodiments are only used for descriptive purposes, as various modifications and changes within the scope of the content disclosed in the present disclosure are obvious to a person skilled in the art. Unless otherwise stated, all parts, percentages, and ratios described in the following embodiments are based on weight, all reagents used in the embodiments are commercially available or synthesized by conventional methods and may be used directly without further treatment, and all instruments used in the embodiments are commercially available.

In the following embodiments and comparative examples, a graphite material used is commercially available or may be prepared according to a method described in the present disclosure.

### Embodiment 1

### Preparation of Graphite:

Needle coke with a fibrous structure proportion of 63.7% was crushed. The crushed material was then shaped to remove fine powder, to obtain a first precursor. Part of the fine powder is removed from the first precursor. The removed fine powder accounted for 21 wt% of the crushed material, where the fine powder had a Dv50 of 3 to 7 µm, a Dv99 less than or equal to 30 µm, and a particle size distribution (Dv90-Dv10)/Dv50 greater than 1.6. The first precursor had a particle size Dv50 of 9.0 µm, a particle size distribution (Dv90-Dv10)/Dv50 of 1.35, and a tap density of 0.65 g/cm³.

The first precursor was granulated in a reactor and shaped to obtain a second precursor with a particle size Dv50 of 14.1 µm.

The first precursor and the second precursor were separately carbonized in a kiln at a carbonization temperature of1100°C for 24 h, to obtain a first intermediate product and a second intermediate product, where the first intermediate product had a tap density of 0.98 g/cm³, and the second intermediate product had a tap density of 0.91 g/cm³.

The first intermediate product and the second intermediate product were separately graphitized in an internal series furnace at a temperature of 2800°C. The internal series furnace had a rated power of 28000 W. A maximum graphitizing power was 22400 W, and was maintained constantly for 24 h to obtain primary particles and secondary particles, respectively.

The primary particles and the secondary particles were evenly mixed at a mass ratio of 1:1, and sieved to obtain a final graphite material.

A disordered layer of the graphite material had a thickness of 11.3 nm, I_{D}/I_{G} of 0.078, and an interlayer spacing d1 of 0.3368 nm. An internal region had an interlayer spacing d2 of 0.3361 nm. A particle size distribution (Dv90-Dv10)/Dv50 was 1.28. A specific surface area was 1.65 m²/g. A volume distribution particle size Dv50 was 10.2 µm. A powder compaction density under a pressure of 49000 N was 1.81 g/cm³. A gram capacity was 350.4 mAh/g.

### (2) Preparation of Negative Electrode Plate

Graphite as a negative electrode active material, carbon black (Super P) as a conductive agent, sodium carboxymethyl cellulose as a thickener, and polyacrylic acid as a linear binder, which were prepared above, were fully stirred and mixed at a mass ratio of 96.3:1:1.2:1.5 in an appropriate amount of solvent, namely, deionized water, to obtain a first slurry.

Graphite as a negative electrode active material, carbon black (Super P) as a conductive agent, sodium carboxymethyl cellulose as a thickener, and styrene-butadiene rubber as a dotted binder, which were prepared above, were fully stirred and mixed at a mass ratio of 96.8:1:1.2:1.0 in an appropriate amount of solvent, namely, deionized water, to obtain a second slurry.

The second slurry and the first slurry were co-extruded by using a dual-chamber coating device. The first slurry was coated on a copper foil, which acted as a negative electrode current collector, and the second slurry was coated on the first slurry. After drying and cold pressing, a negative electrode plate was obtained. The first slurry and the second slurry had the same coating quality of 5.0 mg/cm².

### (3) Preparation of Positive Electrode Plate

Lithium iron phosphate (LFP) as a positive electrode active material, Super P as a conductive agent, and polyvinylidene fluoride (PVDF) as a binder were mixed at a mass ratio of 97:1:2, and a solvent, namely, NMP, was added and stirred uniformly under the action of a vacuum stirrer, to obtain a positive electrode slurry. The positive electrode slurry was evenly coated on an aluminum foil, which acted as a positive electrode current collector, followed by drying, cold pressing, and slitting to obtain a positive electrode plate. The positive electrode film layer had a compaction density of 2.50 g/cm³ and an areal density of 19.47 mg/cm².

### (4) Preparation of Electrolyte Solution

In an argon atmosphere glove box with a water content less than 10 ppm, ethylene carbonate (DEC), ethyl methyl carbonate (EMC), and diethyl carbonate (EC) were mixed at a weight ratio of 1:1:1 to obtain an organic solvent. Then, LiPF6 was dissolved in the organic solvent to prepare an electrolyte solution with a concentration of 1.0 mol/L. Then, vinylene carbonate (VC) was added at a content of 2% by total mass of the electrolyte solution.

### (5) Preparation of Separator

A polypropylene film was used as a separator.

### (6) Preparation of Lithium-ion Battery

The positive electrode plate, the separator, and the negative electrode plate were laminated in sequence, to cause the separator to isolate the positive electrode plate and the negative electrode plate from each other. Then, the positive electrode plate, the separator, and the negative electrode plate were wound to obtain an electrode assembly. The electrode assembly was placed in an outer package case, and an electrolytic solution was injected after drying, followed by procedures such as vacuum packing, standing, formation, and shaping, to obtain a lithium-ion battery.

In Embodiments 2 to 8, the type of the binder in the first slurry and/or the second slurry and/or the mass content of the binder in the first slurry or the second slurry were adjusted. The specific parameters were shown in Table 1.

**Table 1**

| No. | Type of second binder (dotted) in second region | Mass content of second binder in second region | Type of first binder (linear) in first region | Mass content of first binder in first region |
|---|---|---|---|---|
| Embodiment 1 | Styrene-butadiene rubber | 1.0% | Polyacrylic acid | 1.5% |
| Embodiment 2 | Styrene-butadiene rubber | 1.0% | Polymethyl acrylate | 1.5% |
| Embodiment 3 | Styrene-butadiene rubber | 0.5% | Polyacrylic acid | 1.5% |
| Embodiment 4 | Styrene-butadiene rubber | 1.5% | Polyacrylic acid | 1.5% |
| Embodiment 5 | Styrene-butadiene rubber | 1.0% | Polyacrylic acid | 1.0% |
| Embodiment 6 | Styrene-butadiene rubber | 1.0% | Polyacrylic acid | 1.8% |
| Embodiment 7 | Styrene-butadiene rubber | 1.0% | Polyacrylic acid | 2.5% |
| Embodiment 8 | Styrene-butadiene rubber | 1.0% | Polyacrylic acid | 3.0% |

The preparation method in Comparative Example 1 was substantially the same as that in Embodiment 1, except that dotted binders were used for both the first region and the second region in the negative electrode film layer.

The preparation method in Comparative Example 2 was substantially the same as that in Embodiment 1, except that linear binders were used for both the first region and the second region in the negative electrode film layer.

The preparation method in Comparative Example 3 was substantially the same as that in Embodiment 1, except that the second slurry was coated on a copper foil, which acted as a negative electrode current collector and the first slurry was coated on the second slurry.

### Performance Test

### (1) Springback Rate and Cycle Expansion Rate of Electrode Plate

Springback rate of electrode plate: The thickness of a cold-pressed negative electrode plate was L0. The cold-pressed negative electrode plate was stood for 24 h at a temperature of 25°C and a humidity of 10%, the thickness of the negative electrode plate was tested as L1. The springback rate of the electrode plate was calculated as V0=(L1-L0)/L0.

Cycle expansion rate of electrode plate: The batteries from each of the aforementioned embodiments and comparative examples were charged at a constant current of 1 C until the voltage reached 3.65 V, followed by constant voltage charging at 3.65 V until the current was less than or equal to 0.05 C. The batteries were then discharged at a constant current of 1 C until the voltage reached 2.5 V. This was one charge-discharge process. After repeating the charge and discharge process for 100 cycles, the thickness of the negative electrode plate was tested as L2. The cycle expansion rate of the electrode plate was calculated as V2=(L2-L0)/L0.

### (2) Cohesion Strength Test

The negative electrode plate was cut into strips with a length of 20 cm and a width of 20 mm. A 3M tape was evenly applied to the surface of the electrode plate (ensuring a smooth and wrinkle-free surface after application), leaving a small section of copper foil tape attached to a piece of paper. A roller was used to press over the tape back and forth four times. The paper was clamped into a grip of a tensile testing machine. A tensile test was initiated to separate a single-sided adhesive tape attached to a negative electrode active material layer of the strip from the strip. Upon completion of the test, a cohesion force value was obtained. This force was divided by the width (20 mm) of the tested electrode plate to determine the cohesion strength (N/m) between particles within a negative electrode film layer.

### (3) Cycle Performance Test

At 60°C, the batteries from each of the aforementioned embodiments and comparative examples were charged at a constant current of 1 C until the voltage reached 3.65 V, followed by constant voltage charging at 3.65 V until the current was less than or equal to 0.05 C. The batteries were then discharged at a constant current of 1 C until the voltage reached 2.5 V. This was one charge-discharge process. A discharge capacity of the first cycle was recorded as C1. The charge and discharge cycles were repeated until the battery capacity faded to 80% of the initial capacity C1, at which point the test was stopped, and the number of test cycles was recorded.

### (4) Kinetic Performance Test

At 25°C, the secondary battery was charged at a constant current of 0.33 C to 3.65 V, then charged at a constant voltage until the current dropped to 0.05 C. After standing for 5 min, the secondary battery was discharged at a constant current of 0.33 C to 2.50 V, and the actual capacity was recorded as C0.

Subsequently, the secondary battery was charged at constant currents of 1.0 C0, 1.3 C0, 1.5 C0, 1.8 C0, 2.0 C0, 2.3 C0, 2.5 C0, and 3.0 C0 sequentially to either 3.5 V or a negative electrode cutoff potential of 0 V (whichever was reached first). After each charging operation, the battery was discharged at 1 C0 to 2.5 V. The negative electrode potential corresponding to 10%, 20%, 30%, ..., up to 80% SOC (State of Charge) at different charging rates was recorded. A charging rate-negative electrode potential curve at different SOCs was plotted, and linear fitting was performed to determine a charging rate corresponding to a negative electrode potential of 0 V at each SOC. This charging rate represents a charging window at the SOC, denoted as C10%SOC, C20%SOC, C30%SOC, C40%SOC, C50%SOC, C60%SOC, C70%SOC, and C80%SOC. A charging time T (in min) for the secondary battery to charge from 10% SOC to 80% SOC (without lithium plating of the secondary battery) was calculated according to the formula: (60/C10%SOC+60/C20%SOC+60/C30%SOC+60/C40%SOC+60/C50%SOC+60/C60%SOC +60/C70%SOC+60/C80%SOC)×10%. A shorter charging time indicated better kinetic performance of the secondary battery.

### Test Results

The test results are shown in Table 2 and Table 3. As can be seen from Table 2, the secondary battery includes a negative electrode plate. The negative electrode plate includes a negative electrode current collector and a negative electrode film layer formed on at least one surface of the negative electrode current collector. The negative electrode film layer has a first surface away from the negative electrode current collector and a second surface arranged opposite to the first surface. A thickness of the negative electrode film layer is denoted as H. A region within a thickness range from the second surface of the negative electrode film layer to 0.3H is denoted as a first region of the negative electrode film layer. A region within a thickness range from the first surface of the negative electrode film layer to 0.3H is denoted as a second region of the negative electrode film layer. The first region includes a first binder. The first binder is a linear binder. The second region includes a second binder. The second binder is a dotted binder, which can reduce the cold pressing springback rate and cycle expansion rate of an electrode plate, thereby improving the cycle stability of the battery.

**Table 2**

| No. | Springback rate of electrode plate (V0) | Cycle expansion rate of electrode plate (V2) | Quantity of cycles/circle |
|---|---|---|---|
| Embodiment 1 | 5.9% | 29.5% | 1921 |
| Embodiment 2 | 5.3% | 29.9% | 1992 |
| Comparative Example 1 | 10.4% | 33.1% | 1752 |
| Comparative Example 2 | 9.5% | 32.2% | 1787 |
| Comparative Example 3 | 9.1% | 32.6% | 1781 |

As can be seen from Table 3, when the mass proportion of the first binder in the first region is 1.0% to 2.5% and/or the mass proportion of the second binder in the second region is 0.6% to 1.2%, the battery has both good cycle stability and kinetic performance.

**Table 3**

| No. | Cohesion (N/m) | Springback rate of electrode plate (V0) | Cycle expansion rate of electrode plate (V2) | Quantity of cycles/circle | Kinetic performance/min |
|---|---|---|---|---|---|
| Embodiment 1 | 150.5 | 5.9% | 29.5% | 1921 | 26.43 |
| Embodiment 3 | 128.5 | 6.8% | 30.5% | 1892 | 25.82 |
| Embodiment 4 | 178.4 | 5.2% | 29.8% | 1964 | 27.50 |
| Embodiment 5 | 134.5 | 6.1% | 30.1% | 1901 | 25.43 |
| Embodiment 6 | 162.5 | 5.3% | 29.4% | 1924 | 27.43 |
| Embodiment 7 | 172.7 | 4.3% | 28.5% | 1950 | 28.36 |
| Embodiment 8 | 222.6 | 4.1% | 28.2% | 1942 | 32.23 |

It should be noted that the present disclosure is not limited to the foregoing embodiments. The foregoing embodiments are only illustrative, and the embodiments within the scope of the technical solution of the present disclosure that have substantively the same composition and the same role and effect as the technical idea are all included within the technical scope of the present disclosure. In addition, within the scope of not departing from the gist of the present disclosure, various variations made to the embodiments that are conceivable to those skilled in the art and other modes constructed by combining some constituent elements of the embodiments are also included within the scope of the present disclosure.

## Claims

1. A secondary battery, comprising a negative electrode plate, wherein the negative electrode plate comprises a negative electrode current collector and a negative electrode film layer formed on at least one surface of the negative electrode current collector, the negative electrode film layer has a first surface away from the negative electrode current collector and a second surface arranged opposite to the first surface, a thickness of the negative electrode film layer is denoted as H, a region within a thickness range from the second surface of the negative electrode film layer to 0.3H is denoted as a first region of the negative electrode film layer, a region within a thickness range from the first surface of the negative electrode film layer to 0.3H is denoted as a second region of the negative electrode film layer, the first region comprises a first binder, and the first binder is a linear binder; and the second region comprises a second binder, and the second binder is a dotted binder.

2. The secondary battery according to claim 1, wherein a weight-average molecular weight of the first binder is greater than a weight-average molecular weight of the second binder.

3. The secondary battery according to claim 1 or 2, wherein a mass proportion of the first binder in the first region is greater than a mass proportion of the second binder in the second region; the mass proportion of the first binder in the first region refers to a mass percentage of the first binder based on a total mass of the negative electrode film layer in the first region; and the mass proportion of the second binder in the second region refers to a mass percentage of the second binder based on a total mass of the negative electrode film layer in the second region.

4. The secondary battery according to any one of claims 1 to 3, wherein the first binder comprises an acrylic binder; additionally or alternatively, the second binder comprises styrene-butadiene copolymer.

5. The secondary battery according to claim 4, wherein the acrylic binder comprises at least one of polyacrylic acid, polymethacrylic acid, polymethyl acrylate, polyethyl methacrylate, polyhydroxyethyl methacrylate, polyhydroxyethyl acrylate, polyhydroxypropyl acrylate, polyhydroxypropyl methacrylate, polyhydroxyethyl acrylate, polypropyl methacrylate, polyethyl acrylate, and polymethyl methacrylate.

6. The secondary battery according to any one of claims 1 to 5, wherein the weight-average molecular weight of the first binder is 500 to 1500, optionally 800 to 1000; and the weight-average molecular weight of the second binder is 100 to 200.

7. The secondary battery according to any one of claims 1 to 6, wherein the mass proportion of the first binder in the first region is 1.0% to 3.0%, optionally 1.0% to 2.5%, and/or the mass proportion of the second binder in the second region is 0.6% to 1.5%, optionally 0.6% to 1.2%.

8. The secondary battery according to any one of claims 1 to 7, wherein the negative electrode film layer satisfies at least one of the following conditions:
(1) a compaction density of the negative electrode film layer is 1.55 g/cm³ to 1.68 g/cm³; and
(2) the negative electrode film layer comprises a conductive agent, and a mass proportion of the conductive agent is 0.4% to 2.0% based on the total mass of the negative electrode film layer.

9. The secondary battery according to any one of claims 1 to 8, wherein the first region and/or the second region comprise graphite, and the graphite satisfies at least one of the following conditions:
(1) a specific surface area of the graphite is 1.2 m²/g to 1.8 m²/g, optionally 1.25 m²/g to 1.70 m²/g;
(2) a volume distribution particle size Dv50 of the graphite is 7.0 µm to 14.0 µm, optionally 9.0 µm to 12.0 µm;
(3) a particle size distribution (Dv90-Dv10)/Dv50 of the graphite is 1.10 to 1.60, optionally 1.20 to 1.50;
(4) a gram capacity of the graphite is 345 mAh/g to 355 mAh/g, optionally 347 mAh/g to 353 mAh/g;
(5) a powder compaction density of the graphite under a pressure of 49000 N is less than or equal to 1.85 g/cm³, optionally 1.75 g/cm³ to 1.84 g/cm³;
(6) a particle body of the graphite comprises an internal region and a surface region at least partially enclosing the internal region, wherein the surface region refers to a region extending 30 nm from a surface of the particle body to the interior of a particle, and the surface region comprises a disordered layer; optionally, a thickness of the disordered layer is 1 nm to 20 nm;
(7) the graphite comprises both primary particles and secondary particles; optionally, a quantity proportion of the secondary particles is less than or equal to 50% based on a total quantity of the primary particles and the secondary particles;
(8) a graphitization degree of the graphite is 92.0% to 94.0%; and
(9) I_{D}/I_{G} of the graphite material is 0.05 to 0.10, wherein I_{D}/I_{G} is a ratio of a D peak intensity to a G peak intensity by Raman spectroscopy, I_{D} represents the D peak intensity at 1350±100 cm⁻¹, and I_{G} represents the G peak intensity at 1580±100 cm⁻¹.

10. A power consuming apparatus, comprising a secondary battery according to any one of claims 1 to 9.
